# EUROPEAN PATENT APPLICATION

(11) **EP 2 259 599 A1**
(43) Date of publication of application: **08.12.2010**
(21) Application number: 10153841.1
(22) Date of filing: 17.02.2010
(51) Int. Cl.: H04N 13/00

(54) **Method and arrangement for processing a stereo image for three-dimensional viewing**

(30) Priority: 29.05.2009 US 182429 P
(71) Applicant: Telefonaktiebolaget L M Ericsson (Publ), 164 83 Stockholm (SE)
(72) Inventor: Grafulla-González, Beatriz, 223 53 Lund (SE); Johansson, Björn, 235 37 Bjärred (SE); Xu, Sanbao, 226 48 Lund (SE)
(74) Representative: Ström & Gulliksson AB

(57) **Abstract**

A method of processing a stereo image for three-dimensional viewing is disclosed. The stereo image comprises a first view captured by a first image acquiring arrangement and a second view captured by a second image acquiring arrangement. The first view has a first information content and the second view has a second information content, the first information content comprising more information than the second information content. The method comprises stereo matching of the first and second view, transferring information data from the first information content to the second view, and producing an updated second view having an updated information content by merging the transferred information data with information data of the second information content. Corresponding computer program product, arrangement and electronic device are also disclosed.

## Description

### Technical Field

The present invention relates to the field of processing of stereo images.

### Background

Methods wherein two images, corresponding to a left eye view and a right eye view, are used to produce a stereoscopic 3D effect are well known in the art (e.g. stereoscopic cameras and 3D movies). New technology has recently revived and enhanced the interest in stereoscopic effects. Furthermore, standardization work regarding 3DTV is ongoing, and many manufacturers of television sets have shown new displays for rendering of 3D content.

Typically, 3D content is produced by expensive stereo cameras which are explicitly dedicated to recording in 3D. Alternatively or additionally, 3D content is produced by use of computer generated animations. Thus, the cost, complexity, and/or high knowledge threshold entails that there are only limited opportunities (if any at all) for non-professionals to record e.g. their own video clips or still images in 3D.

To enable a consumer camera, mobile phone, or other image capturing device to record in 3D, the device is typically equipped with two adequately positioned lenses, which naturally makes the device more expensive. The magnitude of the cost increase is typically dependent on the quality of the lenses and thus the quality of the 3D viewing experience.

Thus, there is a need for methods and arrangements for producing a stereo image for three-dimensional viewing that keep low the cost increase due to 3D capturing capacity while ensuring a high quality 3D viewing experience.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide methods and arrangements for producing a stereo image for three-dimensional viewing.

According to a first aspect of the invention, this is achieved by a method of processing a stereo image for three-dimensional viewing, wherein the stereo image comprises a first view captured by a first image acquiring arrangement and a second view captured by a second image acquiring arrangement, the first view having a first information content and the second view having a second information content, the first information content comprising more information than the second information content. The method comprises stereo matching of the first and second view, transferring information data from the first information content to the second view, and producing an updated second view having an updated information content by merging the transferred information data with information data of the second information content, wherein the updated information content comprises more information than the second information content.

In some embodiments, the first and second image acquiring arrangements may comprise first and second camera arrangements. The first camera arrangement may be capable of capturing images at a first quality and the second camera arrangement may be capable of capturing images at a second quality, the first quality being higher than the second quality. Quality may, for example, be measured via resolution, color spectrum, spatial resolution, optical aberrations, noise sources, capture sensor quality, and/or temporal resolution (e.g. frame rate).

In some embodiments, the first and second image acquiring arrangements may comprise at least a first and a second lens respectively. Other elements of the respective image acquiring devices (such as, for example, one or more further lenses, capture sensors (CCD, MOS), electronics for capturing an image, and/or memory units or memory space for storing image data) may be exclusively dedicated for each particular image acquiring arrangement, or may be shared between the image acquiring arrangements.

According to some embodiments, the step of stereo matching may comprise creating a disparity map based on the first and second view. In some (but not necessarily all) of these embodiments, the step of transferring information data may comprise creating a synthesized second view based on the disparity map and the first view. According to at least some (but - again - not necessarily all) such embodiments, the step of producing an updated second view may comprise combining information of the synthesized second view and information of the second view to produce the updated information content.

The first information content may comprise coloring information and the second information content may comprise no coloring information. In such embodiments, the step of transferring information data from the first information content to the second view may comprise transferring coloring information.

In some embodiments, the first information content may comprise coloring information and the second information content may comprise less coloring information than the first information content. For example, there may be differences between the second information and the first information regarding one or more of the amount or type of color data (e.g. per image element), the amount or type of color information, the color range and the color quantization. To further exemplify, the coloring quantization may be scarcer for the second information than for the first information content. In such embodiments too, the step of transferring information data from the first information content to the second view may comprise transferring coloring information.

In embodiments where the step of transferring information data from the first information content to the second view comprises transferring coloring information, the step of combining information of the synthesized second view and information of the second view to produce the updated information content may comprise at least one of: analyzing histograms of corresponding regions of the synthesized second view and the second view, and employing histogram equalization to produce color information for the second view, and applying a color space representation with two or more channels to the synthesized second view and adding information of one or more of the two or more channels to the second view.

In some embodiments, the first view may have a higher resolution of image elements than the second view, and the step of transferring information data from the first information content to the second view may comprise transferring information associated with image elements of the first view that are not present in the second view.

In such embodiments, the method may further comprise resizing the second view via interpolation of image elements of the second view.

In some of the embodiments where the step of transferring information data from the first information content to the second view comprises transferring information associated with image elements of the first view that are not present in the second view, the step of combining information of the synthesized second view and information of the second view to produce the updated information content may comprise inserting transferred image elements of the synthesized second view between image elements of the second view.

In some of the embodiments where the step of transferring information data from the first information content to the second view comprises transferring information associated with image elements of the first view that are not present in the second view, the step of combining information of the synthesized second view and information of the second view to produce the updated information content may comprise selecting an image element of the updated second view as a corresponding image element of the synthesized second view if the absolute difference between a value of the corresponding image element of the synthesized second view and a value of a corresponding image element of the resized second view exceeds a threshold, and selecting the image element of the updated second view as the corresponding image element of the resized second view otherwise.

In some of the embodiments where the step of transferring information data from the first information content to the second view comprises transferring information associated with image elements of the first view that are not present in the second view, the step of combining information of the synthesized second view and information of the second view to produce the updated information content may comprise applying a wavelet transform to the synthesized second view to produce a transformed second view, substituting or combining elements of the transformed second view with corresponding elements of the second view or of the resized second view to produce an altered transformed second view, and applying an inverse wavelet transform to the altered transformed second view.

In some of the embodiments where the step of transferring information data from the first information content to the second view comprises transferring information associated with image elements of the first view that are not present in the second view, the step of combining information of the synthesized second view and information of the second view to produce the updated information content may comprise producing an intermediate updated second view by selecting an image element of the updated second view as a corresponding image element of the synthesized second view if the absolute difference between a value of the corresponding image element of the synthesized second view and a value of a corresponding image element of the resized second view exceeds a threshold, and selecting the image element of the updated second view as the corresponding image element of the resized second view otherwise.

The step of combining information of the synthesized second view and information of the second view to produce the updated information content may further comprise applying a wavelet transform to the intermediate updated second view to produce a transformed second view, substituting or combining elements of the transformed second view with corresponding elements of the second view or of the resized second view to produce an altered transformed second view, and applying an inverse wavelet transform to the altered transformed second view.

In stead of selecting an image element of the updated second view as a corresponding image element of the synthesized second view if the absolute difference between a value of the corresponding image element of the synthesized second view and a value of a corresponding image element of the resized second view exceeds a threshold, an image element of the updated second view may be selected if the absolute difference does not exceed a threshold according to some of the embodiments where the step of transferring information data from the first information content to the second view comprises transferring information associated with image elements of the first view that are not present in the second view.

In some embodiments, the method may further comprise filtering the updated second view.

A second aspect of the invention is a computer program product comprising a computer readable medium, having thereon a computer program comprising program instructions, the computer program being loadable into a data-processing unit and adapted to cause the data-processing unit to execute method steps according to the first aspect of the invention when the computer program is run by the data-processing unit.

A third aspect of the invention is an arrangement for processing a stereo image for three-dimensional viewing, wherein the stereo image comprises a first view captured by a first image acquiring arrangement and a second view captured by a second image acquiring arrangement, the first view having a first information content and the second view having a second information content, the first information content comprising more information than the second information content. The arrangement comprises transferring circuitry adapted to transfer information data from the first information content to the second view, and circuitry adapted to produce an updated second view having an updated information content by merging the transferred information data with information data of the second information content.

The transferring circuitry may comprise a disparity estimator adapted to create a disparity map based on the first and second view, and a view synthesizer adapted to create a synthesized second view based on the disparity map and the first view. The circuitry adapted to produce an updated second view may comprise a combiner adapted to combine information of the synthesized second view and information of the second view to produce the updated information content.

In some embodiments, wherein the first view have a higher resolution of image elements than the second view, the arrangement may further comprise an image resizer adapted to resize the second view via interpolation of image elements of the second view.

A fourth aspect of the invention is an electronic device comprising an arrangement according the third aspect of the invention and the first and second image acquiring arrangements.

In some embodiments, the second, third and fourth aspects of the invention may additionally have features identical with or corresponding to any of the various features as explained above for the first aspect of the invention.

An advantage of some embodiments of the invention is that low-cost implementation possibilities of 3D capturing are provided.

Another advantage of some embodiments of the invention is that implementations are provided which are less expensive than those applying two high quality image acquiring arrangements (e.g. two high quality cameras).

Another advantage of some embodiments of the invention is that 3D image quality (e.g. in terms of resolution and/or color representation) is improved by stereo image processing. This in turn has the advantage of an enhanced 3D viewing experience.

### Brief Description of the Drawings

Further objects, features and advantages of the invention will appear from the following detailed description of embodiments of the invention, with reference being made to the accompanying drawings, in which:
Fig. 1 is a flowchart illustrating example method steps according to some embodiments of the invention;
Fig. 2 is a plot illustrating example color component estimation according to some embodiments of the invention;
Fig. 3 is a block diagram illustrating an example arrangement according to some embodiments of the invention;
Fig. 4A is a schematic drawing illustrating image elements of a processed view according to some embodiments of the invention;
Fig. 4B is a flowchart illustrating example method steps according to some embodiments of the invention;
Fig. 5 is a block diagram illustrating an example arrangement according to some embodiments of the invention;
Fig. 6 is a block diagram illustrating an example arrangement according to some embodiments of the invention;
Fig. 7 is a schematic drawing illustrating various image transform elements according to some embodiments of the invention;
Fig. 8 is a schematic drawing illustrating a mobile terminal comprising an arrangement according to some embodiments of the invention; and
Fig. 9 is schematic drawing illustrating a computer program product according to some embodiments of the invention.

### Detailed Description

In the following, embodiments of the invention will be described where a stereo image comprising two views (denoted e.g. first and second view or left and right view) is captured via two image acquiring devices, where one of the image acquiring arrangement captures images at high quality and the other image acquiring arrangement captures images at relatively lower quality. Quality in this context may, for example, be defined as the amount of information of the image content. Example measures that may be used for quality definition include image resolution, color content (color/black-and-white or color resolution), etc. Quality may also be defined via lens quality and/or camera parameter(s) of the image acquiring arrangements. Another parameter affecting the quality may be the mutual positioning of the image acquiring arrangements.

The term image element may, when used in this description, refer to a pixel, a voxel, a collection of pixels or voxels, or any other type of element of an image or view.

The thus captured stereo image may be processed to transfer at least some of the information of the high quality view and combine it with information of the low quality view to enhance the overall quality of the stereo image.

The stereo image may be a still image or may be part of a 3D video clip or film sequence. In the latter case, the quality enhancement processing may be applied to e.g. each frame of the video clip or film.

The cost issue relating to implementing consumer products capable of stereo image capturing has been mentioned above. Two equally good high quality lenses (or other image acquiring arrangements) adequately positioned on a device would typically make the device much more expensive than one comprising only a single image acquiring arrangement. Thus, one may want to avoid this for at least some consumer products.

To overcome this obstacle, embodiments of the invention apply using a high quality image acquiring arrangement (often already available in consumer products, e.g. mobile phones and digital cameras) in combination with a lower quality image acquiring arrangement (which may or may not already be available in the targeted consumer product, e.g. video telephony camera of some mobile phones).

Ideally, these two image acquiring arrangements are positioned such that images captured by the respective arrangement adequately represent a left and right view of a stereo image (e.g. distance between lenses corresponding to distance between left and right eye of an average person). However, approximations of and/or deviations from such an ideal situation may also be applicable for some embodiments of the invention.

In some embodiments, the first (high quality) image acquiring arrangement comprises a high resolution camera, and the second (low quality) image acquiring arrangement comprises a low resolution camera. In such embodiments, content of a high resolution (first) view may be transferred to and combined with content of a low resolution (second) view to increase the resolution of the second view.

In some embodiments, the first (high quality) image acquiring arrangement comprises a color camera, and the second (low quality) image acquiring arrangement comprises a black-and-white camera. In such embodiments, content of a color (first) view may be transferred to and combined with content of a black-and-white (second) view to convert the second view to a color view.

Combinations of the above embodiments are also envisaged.

It will generally be assumed in the following description of embodiments that both of the image acquiring arrangements are adequately calibrated. For example, this may imply that intrinsic camera parameters (focal length, aspect ratio, skew, principal point) and extrinsic camera parameters (relative orientation and position) are known. If the parameters are considered static the calibration can be performed off-line, otherwise the calibration can be performed in real time using e.g. point correspondences in the unknown scene (auto-calibration). The calibration may utilize any suitable method, for example any such method known in the art. The estimated camera parameters of the calibration may then be used in the processing.

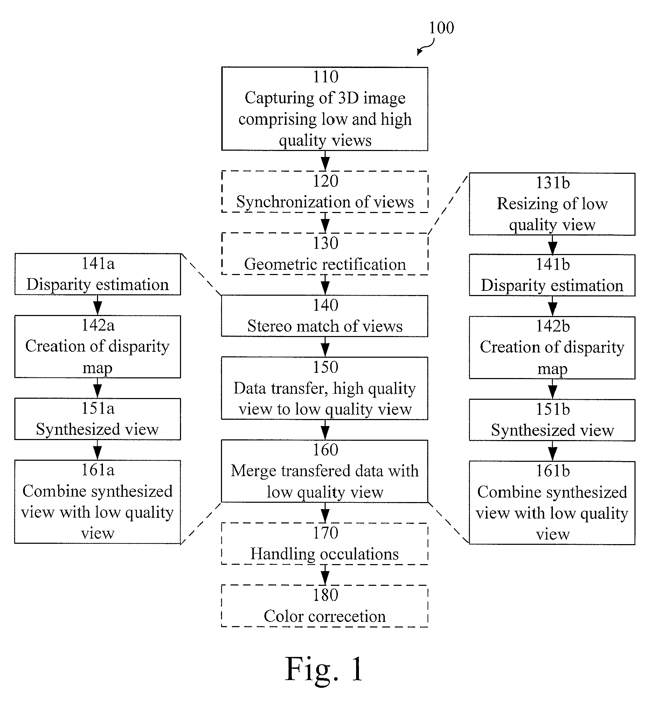

Figure 1 illustrates an example method 100 for processing of a stereo image according to some embodiments of the invention. The mid column (110-180) of Figure 1 illustrates general method steps that may be performed in the processing of the stereo image according to this embodiment. The left column (141a-161a) specifies particular method steps that may be performed when color content is transferred between views, and the right column (131b-161b) specifies particular method steps that may be performed when high resolution content is transferred between views.

In step 110, a stereo image comprising a high quality view and a low quality view is captured or otherwise acquired.

An ideal stereo capture includes two views (left and right) which are acquired at exactly the same moment, so that the recorded scenes in both views correspond to same time instant. This is of particular importance for moving scenes because if the views are delayed with respect to each other no or limited 3D experience is possible. Therefore, synchronizing the image acquiring arrangements is important.

The views are synchronized in optional step 120. Operations of step 120 may be performed according to any suitable method, for example according to any such method known in the art.

For example, one possible implementation of the synchronization is a master/slave configuration where one of the image acquiring arrangements determines the moment of image/frame capturing. Another possible implementation of the synchronization is based on hardware, e.g. sending the same capture signal to both image acquiring arrangements at the same time. A third possible implementation of the synchronization comprises employing a starting capturing time and an interval relating to further frame capturing, both of which may be established beforehand.

Carrying on, an ideal stereo camera has a number of properties that provide for a high quality 3D viewing experience. For example, the viewing direction should be the same for the two image acquiring arrangements of the stereo camera, the image planes of the two views should coincide, the image coordinate systems of the two views should be aligned, and the camera parameters should be the same for the two image acquiring arrangements.

In a practical scenario with two different image acquiring arrangements, the above described ideal properties are often not fulfilled. To overcome this drawback, the views may be processed in order to compensate for the non-ideal setup and to bring the two views as close to the above ideal properties as possible. Example processing with this aim may include rectifying the views, aligning intrinsic camera parameters of the image acquiring arrangements, resizing the views so that they have the same size (see also stereo matching, step 140), and/or cropping the views so that they have the same field of view.

Such processing may be termed geometrical rectification and is performed in optional step 130. Operations of step 130 may be performed according to any suitable method, for example according to any such method known in the art.

The two views of the stereo image are stereo matched in step 140. Stereo matching may comprise determining, for each image element (e.g. pixel) of the low quality view, the corresponding image element of the high quality image. Operations of step 140 may be performed according to any suitable method, for example according to any such method known in the art.

In step 150, information relating to the high quality view is transferred to the low quality view processing chain and in step 160 the transferred information is merged with information relating to the low quality view to produce an updated view. The operations of steps 150 and 160 may involve various types of information and merging processes as will be exemplified in the following.

If there are any occlusions, these may be handled in optional step 170. Occlusions are when some part(s) of one view are not visible in the other view (or vice versa). If parts of the low quality view are not visible in the high quality view, there is no information to transfer and merge regarding these parts.

Operations of step 170 may be performed according to any suitable method, for example according to any such method known in the art and/or according to methods that will be described in the following.

Optional step 180 provides color correction. This step may be useful since the colors of images/videos captured by two different image acquiring arrangements (e.g. a good camera and a bad camera) can be quite different. The same may be true for the case where one of the captured views is originally a black-and-white image and color has been transferred from the other view.

It should be noted that, in other embodiments, step 180 may be performed earlier in the process, for example, between step 120 (synchronization) and step 130 (geometric rectification).

Significant colorimetric difference between the two views of a stereoscopic image pair can lead to binocular rivalry. To have an acceptable 3D-viewing comfort, colorimetric symmetry should be respected. Specifically, asymmetries in color, luminance, and contrast should preferably be avoided to the highest possible degree. In some embodiments, a goal is set that the two views should be identical in contrast and (with lower criticality) in luminance and color. One criteria used for this may be that if the views are displayed side by side, no discrepancy should be visible.

Thus, step 180 provides color correction. Operations of step 180 may be performed according to any suitable method, for example according to any such method known in the art.

For example, an image-based color calibration/correction method for stereo or multiple cameras of different brands/models/qualities may be used. Some embodiments of this method may provide for matching colors of video frames from different image acquiring arrangements with each other, without using a color test pattern. This is achieved by using one of the image acquiring arrangements as a reference and correcting the colors of views (e.g. video frames) from the other image acquiring arrangement(s) by mapping color pixel values to those of the reference arrangement so that the views of the other arrangement(s) have the same color appearance on display. Optionally, a white balance operation to the reference arrangement may be applied to remove/reduce any color cast that may exist in views from the reference arrangement. This may be implemented as a real time algorithm since the color mapping procedure can be efficiently carried out without any non-linear high dimensional minimization. If, as in a preferred case, this color correction algorithm performs color histogram matching, the contrast and luminance in the two views will be almost identical as well.

In some embodiments, steps 130 and 150 may not be separate operational steps, but may be seen as part of steps 120/140 and 160 respectively.

Turning now to the left column of Figure 1, operation of steps 140-160 will be specified for the color transfer situation. This is applicable for a situation where the low quality view is a black-and-white view and the high quality view is a color view. It may also be applicable for a situation where both views are color views but the low quality view has inferior color representation compared to the high quality view.

For this situation, the information transfer of step 150 involves providing the image elements (e.g. pixels) of the low quality view with color information. The correspondence of image elements of the two views is known after the stereo matching step 140 and may be used to match color information to the correct image element in the merging process (step 160).

In step 141a, the two views are processed using a disparity estimation algorithm (which, in some embodiments, may also need knowledge of internal and/or external camera parameters of the image acquiring arrangements). A disparity map is created in step 142a (e.g. comprising a pixel-to-pixel correspondence between the two views). Operations of steps 141a and 142a may be performed according to any suitable stereo matching algorithm, for example according to any standard method known in the art.

Using the disparity map and color information from the high quality view a new view in color (relating to the low quality view) is synthesized in step 151a. This synthesized view is generally not of the same quality as the captured view(s). This may be due to errors in the disparity mapping, occlusions, and/or other limitations in the algorithms involved. Therefore, it may be desirable to not simply let the synthesized view replace the low quality view.

Thus, step 161a combines information of the synthesized view with information relating to the low quality view (e.g. either information taken directly from the low quality view or processed information relating to the low quality view) to produce an updated view that may be rendered in place of the low quality view.

The combination of information of step 161a may, for example, be implemented using either of a histogram equalization based approach or a color space approach.

In the histogram equalization based approach, histograms of one particular region of the synthesized color view and the corresponding region of the low quality view are analyzed. Applying histogram equalization thus enables finding of a transformation from grayscale to each color component for this region of the view. Any suitable histogram equalization algorithm may be used.

The region of view that is analyzed may, for example, be a window of a particular size and form or a region estimated by a color segmentation algorithm.

It is not unlikely that a particular grayscale value should be transformed to e.g. a green image element in one part of the view and to e.g. a red image element in another part of the view, i.e. that the same grayscale value correspond to different colors. One possible way to deal with this may be to choose the regions (e.g. size and form) such that the probability is minimized (or at least kept low) that a particular region contains grayscale values that should be transferred to different color values.

One example of such a choice (and possibly the simplest) is having a small window size. However, the estimation of the color transformation using histograms generally produces a better result if the region comprises many image elements. Furthermore, errors in the synthesized view may have less effect on the transformation estimation if the region is large. Therefore, choosing a small window size may not always be preferable.

Another example of a way to choose the regions (e.g. size and form) such that the probability is minimized is defining the regions based on colors in the synthesized view (e.g. using color pixel values or color based segmentation).

The histogram approach enables dealing with errors in the synthesized view. An example is that it is likely that two image elements that are close and that have the same grayscale value should also have the same color value even if the corresponding elements in the synthesized view have different colors. Using the histogram approach will be helpful in correcting such errors.

One possible problem with the histogram equalization based approach using windows is that it may introduce blocking artifacts. Using segmented regions may overcome this drawback.

In some embodiments of the color space (e.g. HSV - hue, saturation, value - or YUV) approach, only the color information (not the intensities) of the synthesized view are used and are combined with the intensities from the original low quality. This may be achieved by transforming the synthesized view to a color space, which encodes the intensities on a separate channel.

One such possibility is to use the HSV color space and replace the V channel (encoding the intensity/brightness) with information of the original low quality view. The H and S channels (encoding the hue and saturation) may be kept as they are in the synthesized view.

Another possibility is to use the YUV color space. Then, the Y component (luma or brightness) may be exchanged for information of the original low quality view while the U and V components may be kept as they are in the synthesized view.

A problem with such a pixel-to-pixel (or other image element) approach might be that if there is an error in the synthesized view in that the estimated color for a particular pixel is not correct, the final view will also have this incorrect color value. In contrast to the histogram equalization based approach this approach does not generally handle errors in the synthesized colors.

One example way to overcome this problem for the color space approach is to compare the brightness component of the synthesized view with the brightness component of the original low quality view. If there is a large difference in brightness (e.g. if absolute difference between the brightness values exceeds a threshold), it may be considered likely that the corresponding color value of the synthesized view is wrong. If so, color values (and/or other information) of neighboring image elements may be used to create new color components for the image element with the supposedly wrong synthesized color value.

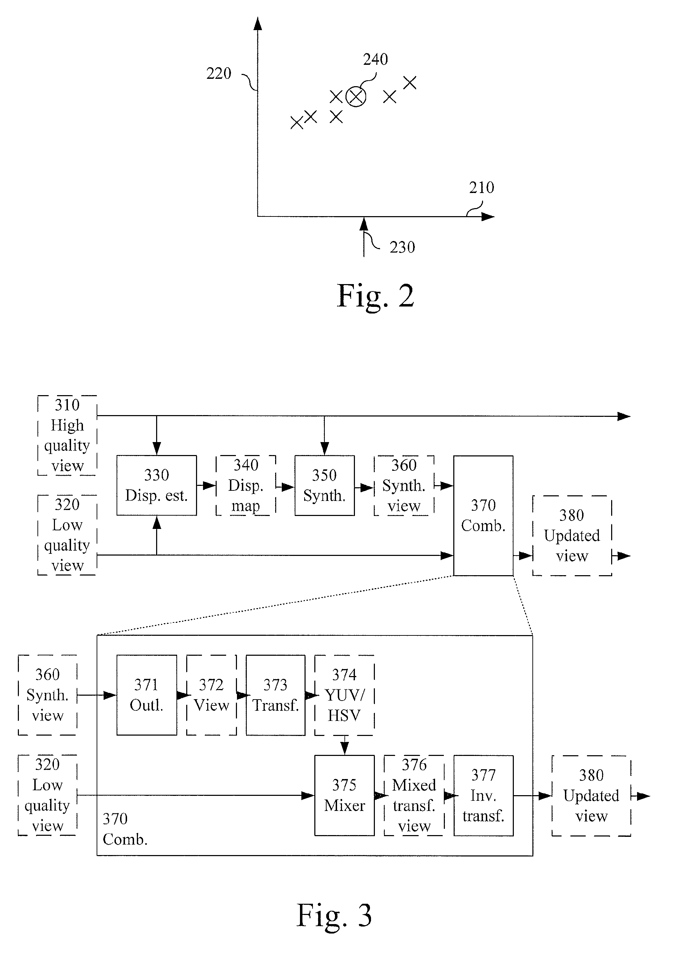

For example, the color values of the image element in the neighborhood that has the closest grayscale value and that is not erroneous according to the above test may be used. This approach is illustrated in Figure 2, where the x-axis 210 represents grayscale values, the y-axis 220 represents a color component, the arrow 230 represents the grayscale value of an image element of the original low quality view with a supposedly wrong synthesized color value, and the crosses represent grayscale and color component values of neighboring image elements. Since the cross denoted 240 has a grayscale value that is closest to the grayscale value 230, the corresponding color component value may be used for the image element with the supposedly wrong synthesized color value.

Alternatively, the color values for the image element with the supposedly wrong synthesized color value may be estimated based on all non-corrupted image elements in the neighborhood in a more sophisticated way (e.g. by interpolation or other approximation).

Occlusions may occur in either or both of the views. Thus, step 170 may relate to handling of occlusions in either or both of the high quality view and the low quality view. In general, occlusions may be dealt with by detecting image elements that are occluded in one of the views and, for each such image element of the other one of the views, performing compensation operations.

For example, if an image element (e.g. pixel) is visible in the low quality view, but occluded in the high quality view (i.e. the image element does not have a corresponding element in the high quality view), histogram equalization based on a number of non-occluded image elements in the neighborhood may be used in to complete the color transfer also for occluded image elements.

If, on the other hand, an image element is visible in the high quality view, but occluded in the low quality view, there is usually no need to transfer any color information for this element to the low quality view. If, however, color transfer is needed for some reason (e.g. because the information is needed to define color of a neighboring element), one of the color space methods presented herein may be used with the modification that all three color components are transferred from the high quality view.

Figure 3 is a block diagram illustrating an example arrangement according to some embodiments of the invention. The arrangement may, for example, be adapted to carry out the method involving transfer of color information as described in connection to Figure 1. In Figure 3, dashed boxes represent various initial, intermediate, or final views (e.g. in the form of temporarily stored information data), and solid line boxes represent functional units of the arrangement.

A high quality view and a low quality view are represented by boxes 310 and 320 respectively. Information data of these two views are forwarded to a disparity estimator 330, which produces a disparity map 340 based on the data of the two views (compare with steps 141a and 142a of Figure 1). A synthesizer 350 creates a synthesized view 360 based on the disparity map 340 and data of the high quality view 310 (compare with step 151a of Figure 1). Then a combiner 370 creates an updated view 380 that may be used in stead of the low quality view 320. The updated view 380 is created based on the low quality view 320 and the synthesized view 360 (compare with step 161a of Figure 1).

If a color space representation approach is used, the combiner 370 may include the example blocks as shown in the zoomed-in view of Figure 3. In this case, the combiner 370 comprises an outlier remover 371, which produces a view 372 without outliers, where outliers are associated with or defined as artifacts of the synthesized view as described herein (e.g. certain deviations in the synthesized view from the low quality view). The combiner 370 also comprises a transform unit 373, which transforms the view 372 to a suitable color space (e.g. YUV or HSV) representation 374. Furthermore, the combiner 370 comprises a mixer 375, which mixes the transformed view 374 with the low quality view 320 (for example, by selecting different channels from different sources, see description of color space representation approach above) to produce a mixed transformed view 376, and an inverse transform unit 377 which performs an inverse color space transform on the mixed transformed view 376 to produce the updated view 380.

Turning now to the right column of Figure 1, operation of steps 130-160 will be specified for the resolution transfer situation. This is applicable for a situation where the low quality view has lower resolution than the high quality view. The low resolution may be specified to be of scale s if the ratio between the high and low resolution along each axis is s.

For this situation, the information transfer of step 150 involves providing information to increase the resolution (i.e. the number of the image elements (e.g. pixels)) of the low quality view.

Since the two views are of different sizes (due to the different resolution), the low quality view is resized in step 131b to the same size as the high quality view. The resizing may, for example, be achieved by (bicubic) interpolation or oversampling of the low quality view, or by any other suitable resizing method.

In step 141b, the two views (after resizing) are processed using a disparity estimation algorithm (which, in some embodiments, may also need knowledge of internal and/or external camera parameters of the image acquiring arrangements). A disparity map is created in step 142b (e.g. comprising a pixel-to-pixel correspondence between the two views). Operations of steps 141b and 142b may be performed according to any suitable stereo matching algorithm, for example according to any standard method known in the art.

Using the disparity map and information from the high quality view a new view (relating to the low quality view but with the same resolution as the high quality view) is synthesized in step 151b. This synthesized view is generally not of the same quality as the captured view(s). This may be due to errors in the disparity mapping, occlusions, and/or other limitations in the algorithms involved. Therefore, it may be desirable to not simply let the synthesized view replace the low quality view.

Thus, step 161b combines information of the synthesized view with information relating to the low quality view (e.g. either information taken directly from the low quality view or processed information relating to the low quality view, for example, information of a resized and/or transformed low quality view) to produce an updated view that may be rendered in place of the low quality view.

The combination of information of step 161b may, for example, be implemented using one or more of an insertion approach, a wavelet approach, and a threshold approach. In particular a combination of the wavelet approach and the threshold approach may be considered. Regardless of which approach is chosen for use in step 161b, it may be combined with filtering (e.g. a median filter or a bilateral filter) to improve the result.

In the insertion approach a new pixel (or other image element) may be inserted in between two original pixels of the low quality image. The new pixel may be given a value corresponding to that of the pixel of the high-resolution image (or of the synthesized view) located in between the two pixels that correspond to the two original pixels of the low quality view (known from the disparity map). This way the resolution of the low quality view can be increased.

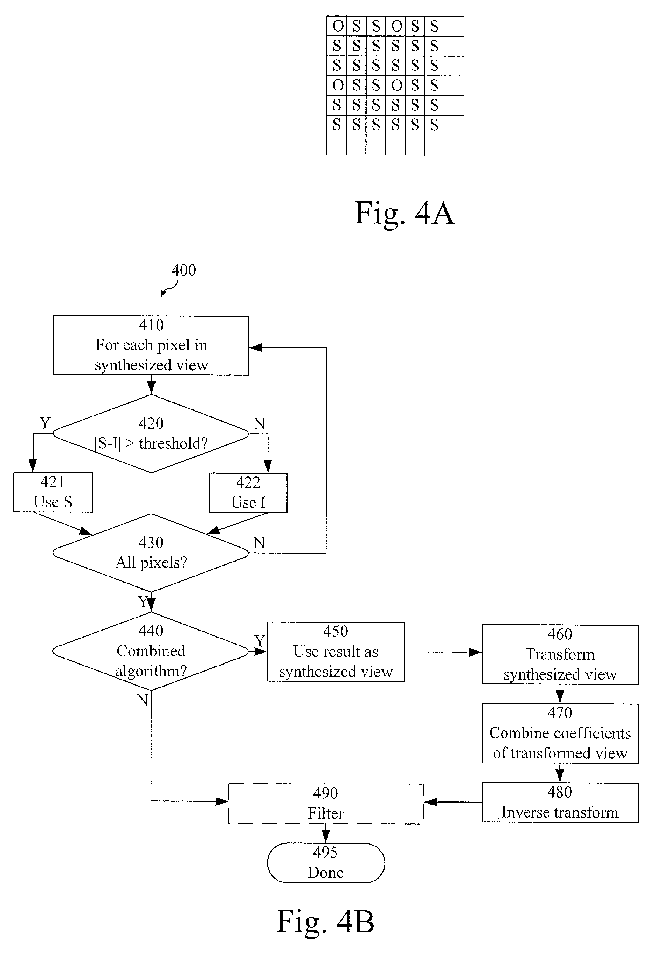

This approach is illustrated in Figure 4A, where some image elements of the updated view are shown. O represent image elements that have the same value as in the original low quality view and S represent image elements that have a value taken from an image element of the synthesized (or original high quality) view.

It should be noted that the resizing step 131b may not be employed in all embodiments where the insertion approach is used. A disparity map is often defined based on two images (views) with the same size (resolution). There are, however, methods that may define a disparity map based on images with different resolution. It may also be noted that the synthesized view may simply be the original high quality view for some embodiments where the insertion approach is used.

A potential problem with the insertion approach relates to occlusions between the views. Occlusions have been defined above, and in this scenario they result in that the stereo matching cannot give a correspondence between all image elements of the high and low quality views. Therefore, some of the new image elements to be inserted in the low quality view may not have a corresponding image element in the high quality view.

Occlusions may, in this and other scenarios, be handled by estimating empty pixels (or other image elements) based on surrounding or otherwise neighboring image elements. The occlusion handling may be performed according to any suitable algorithm, for example according to any standard method known in the art such as, for example, super-resolution techniques, pixel interpolation (e.g. bi-linear, cubic spline, etc.), or statistical techniques.

In the wavelet based approach an attempt is made to tweak the synthesized view (which typically may contain errors) so that it better matches the low resolution view. The synthesized view and the low resolution view may be decomposed into approximation coefficients and detail coefficients using a wavelet transform. Then, a combination of coefficients from both of the views may be combined. For example, the approximation coefficients of the low resolution view and the detail coefficients of the synthesized view may be used (or vice versa). Finally, the combined coefficients are subjected to an inverse of the applicable wavelet transform.

The wavelet approach is best suited for scales that are a multiple of 2. However, if an interpolated low resolution view is used instead of the original low resolution view, other scales may be applicable as well.

Taking a scale 3 stereo image as an example, it may be noted that when a first order (level) wavelet transform is used for the scale 3 stereo image, the first level approximation contains interpolated data (since the original view is smaller than the approximation). This generally gives a low sharpness measurement. When a second level wavelet transform is used for a scale 3 stereo image, some of the original low quality view data is not part of the second level approximation. Either this information is discarded or it is incorporated as second level details together with interpolation data. Contrarily, if the scale is a multiple of 2, no data has to be discarded and no interpolated data has to be used in the reconstruction.

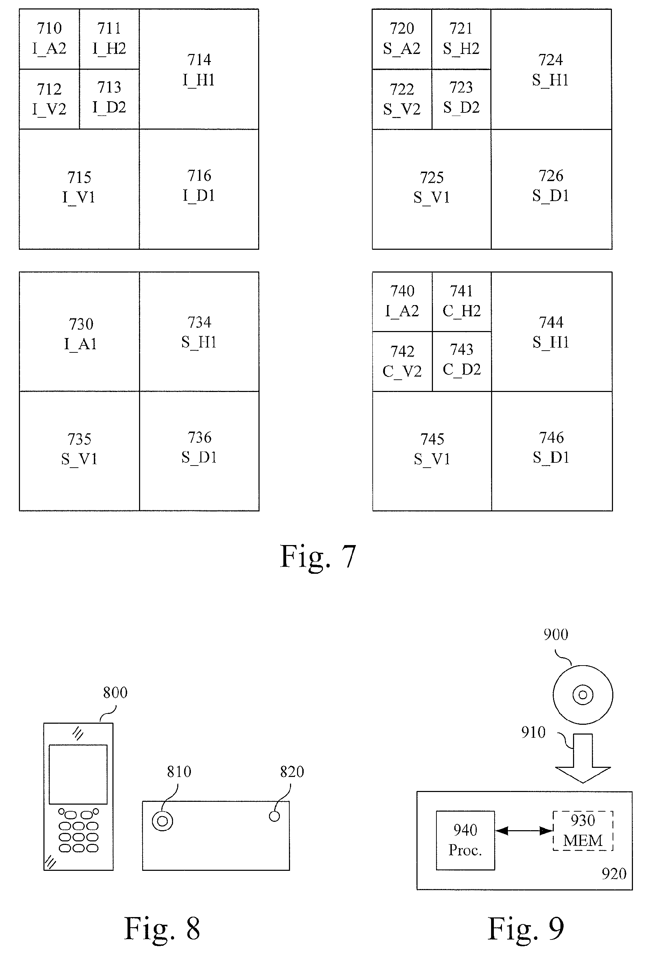

Figure 7 illustrates various decomposition representations and some example coefficient combinations relating to a wavelet transform. In this example, the Haar wavelet is used, but embodiments of the invention are equally applicable for other suitable transforms. Coefficients 710-716 represent a second level wavelet decomposition of a (possibly interpolated) low quality view and coefficients 720-726 represent a second level wavelet decomposition of a synthesized view. It should be noted that using a second level wavelet is only an example and other levels may be equally applicable. For example, a first level wavelet transform may be suitable for scales 2 and 3, and a second level wavelet transform may be suitable for scales 3 and 4.

The decomposition elements of the synthesized and interpolated views may be combined and the combination may be transformed back to get the final updated view.

In some embodiments, the approximation coefficients from the interpolated view and the detail coefficients from the synthesized view are combined, as is illustrated in Figure 7 by reference numerals 730, 734, 735, 736. This combination may by particularly attractive when the scale is a power of two, since all the information from the low resolution view is in the approximation coefficients and the detail coefficients only contain synthesized information.

In some embodiments, the detail coefficients of the interpolated image may also be used. One such embodiment is exemplified in Figure 7 by reference numbers 740-746, where coefficients 741-743 are calculated as an average of the corresponding coefficients of the synthesized view and the interpolated view (e.g. C_H2 = (S_H2 + I_H2) / 2, etc). This combination may be suitable for scales that are not a power of two, since the approximation coefficients do not contain all the information of the original low resolution view but some information from the original low resolution view is present also in the detail coefficients together synthesized data.

After combination, the combined wavelet transform is inverse transformed into a reconstructed view. Since, some possible artifacts of the synthesized view typically show also in the view resulting from the inverse transform, it may be beneficial to filter the reconstructed view using, for example, a small median filter.

A variant of the wavelet approach comprises application of wavelet transformation in one dimension. Assuming that the geometric rectification is accurate but that the disparity map has errors, the pixel (or other image element) values of the synthesized view are located in the correct row but maybe not at the correct position of this row. The quality of the synthesized view may be increased by 1D (one-dimensional) wavelet transforming each row in the synthesized view and the corresponding row in the interpolated (or original low quality) view, combining the approximation coefficients of the interpolated row with detail coefficients of the synthesized row, and transforming back. This may be repeated for all rows, and the reconstructed rows may be used to create the final view.

The threshold approach provides an alternative method for combining information of the low resolution view and of the high resolution synthesized view. In this approach the new view (N) is created by choosing, for each pixel (or other image element) value in N, the corresponding image element value of the synthesized view (S) if the absolute difference between the corresponding image element values of the interpolated (resized) view (I) and the synthesized view exceeds a threshold. Otherwise, the corresponding image element value of the interpolated view is chosen.

The threshold value determines to which extent the image elements of the new view originate from the synthesized view and to which extent the image elements of the new view originate from the interpolated view. The threshold value may be predetermined or adaptive. In some embodiments, the threshold value may be set so that the ratio between the number of pixels originating from the interpolated view and the total number of pixels in the new view correspond to 1/(s*s) where s is the scale of the low resolution view as defined above. As for the wavelet approach, it may be beneficial to filter the new view using, for example, a median filter.

A combined approach employing both the wavelet approach and the threshold approach may also be considered.

Figure 4B illustrates an example method 400, which includes both the case when the threshold approach is used alone and when it is used in combination with the wavelet approach.

At the start of the method it is assumed that the synthesized view and the resized view are available. For each pixel (or other image element) in the view that should be created (step 410) it is determined (in step 420) whether or not the absolute difference between the corresponding pixel values of the synthesized view and the resized view exceeds a threshold. If the threshold is exceeded (YES-path out of step 420) the pixel is assigned the same value as the corresponding pixel of the synthesized view (step 421). If, on the other hand, the threshold is not exceeded (NO-path out of step 420) the pixel is assigned the same value as the corresponding pixel of the resized view (step 422). Then, it is determined (step 430) if all pixels have been assigned a value. If not, the process returns to step 410, otherwise the new view has been created.

If the combination of information applies the threshold approach only (NO-path of step 440), the updated view is completed (step 495), possibly after filtering in optional step 490. If, however, the combination of information applies the combined (threshold and wavelet) approach (YES-path of step 440), the new view and the resized view are transformed in step 460. Then coefficient combining is performed in step 470, for example according to any of the examples given above, and the result is inverse transformed in step 480. Then, the updated view is completed (step 495), possibly after filtering in optional step 490.

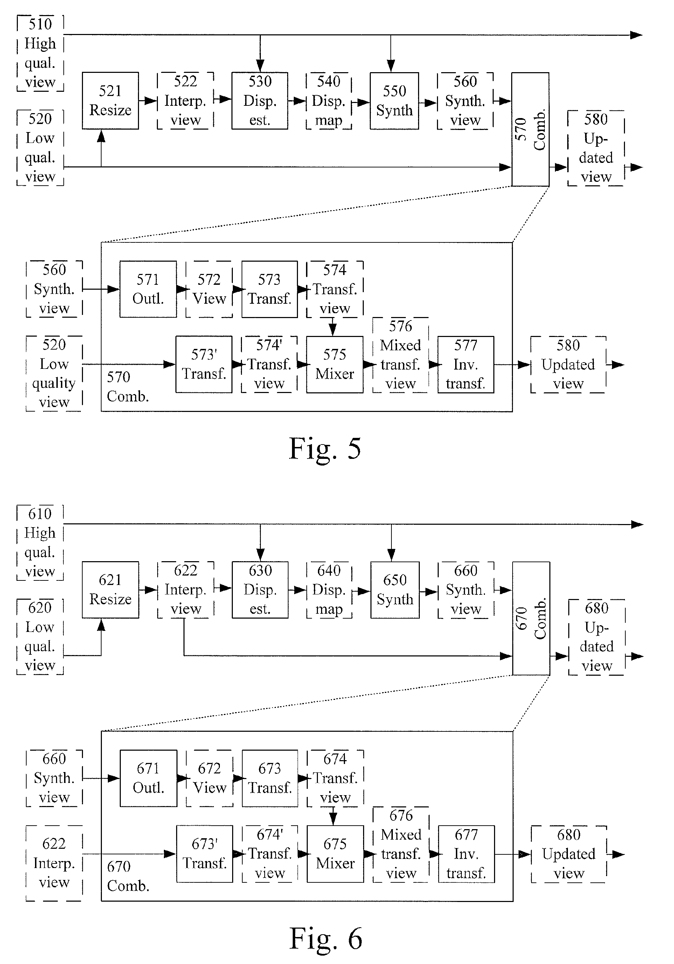

Figures 5 and 6 are block diagrams illustrating example arrangements according to some embodiments of the invention. The arrangements may, for example, be adapted to carry out the method involving information transfer to increase resolution as described in connection to Figure 1. In Figures 5 and 6, dashed boxes represent various initial, intermediate, or final views (e.g. in the form of temporarily stored information data), and solid line boxes represent functional units of the arrangement.

A high quality view and a low quality view are represented by boxes 510/610 and 520/620 respectively. The low quality view 520/620 is input to a resizer 521/621, which produces a resized view (e.g. by interpolation) 522/622 (compare with step 131b of Figure 1). Information data of the resized view 522/622 and of the high quality view 510/610 are forwarded to a disparity estimator 530/630, which produces a disparity map 540/640 based on the data of the two views (compare with steps 141b and 142b of Figure 1). A synthesizer 550/650 creates a synthesized view 560/660 based on the disparity map 540/640 and data of the high quality view 510/610 (compare with step 151b of Figure 1). Then a combiner 570/670 creates an updated view 580/680 that may be used in stead of the low quality view 520/620 (compare with step 161b of Figure 1). The updated view 580/680 is created based on the synthesized view 560/660 and either of the low quality view 520 (e.g. if the scale is a multiple of 2) or the resized view 622 (e.g. if the scale is not a multiple of 2).

If the scale is a multiple of 2, the combiner 570 may include the example blocks as shown in the zoomed-in view of Figure 5. In this case, the combiner 570 comprises an outlier remover 571, which produces a view 572 without outliers. The combiner 570 also comprises a transform unit 573, which transforms the view 572 to a using a suitable wavelet transform to a transformed view 574. Furthermore, the combiner 570 comprises a mixer 575, which mixes the transformed view 574 with a transform 574' of the low quality view 520 (produced by transform unit 573', which may or may not utilize the same hardware as transform unit 573) to produce a mixed transformed view 576, and an inverse transform unit 577 which performs an inverse wavelet transform on the mixed transformed view 576 to produce the updated view 580.

If the scale is not a multiple of 2, the combiner 670 may include the example blocks as shown in the zoomed-in view of Figure 6, which are similar or identical to those described in connection to Figure 6 and will therefore not be elaborated on in detail. It is noted, however, that for this case, the resized view 622 is input to the transform unit 673' in stead of the low quality view 520 as was done in Figure 5.

Embodiments of the invention may also combine color information transfer (left column of Figure 1 and/or Figure 3) and information transfer to increase resolution (right column of Figure 1 and/or Figure 5 or 6). This may be applicable, for example, if the low quality view is a black-and-white image, the high quality view is a color image, and the low quality view has lower resolution than the high quality view.

Figure 8 illustrates an example mobile terminal 800, which may comprise an arrangement according to embodiments of the invention. The mobile terminal 800 may, for example, comprise an arrangement as described in connection to any of the Figures 3, 5 and 6. The mobile terminal 800 is illustrated as a mobile telephone in a schematic front view and corresponding back view. The mobile terminal 800 comprises a high quality image capturing arrangement 810 and a low quality image capturing arrangement 820, which together are suitable for capturing an initial stereo image. The arrangement according to embodiments of the invention comprised in the mobile terminal 800 may be adapted to process the initial stereo image to enhance its quality as has been described in this application.

The described embodiments of the invention and their equivalents may be realized in software or hardware or a combination thereof. They may be performed by general-purpose circuits associated with or integral to a communication device or other consumer product, such as digital signal processors (DSP), central processing units (CPU), co-processor units, field-programmable gate arrays (FPGA) or other programmable hardware, or by specialized circuits such as application-specific integrated circuits (ASIC). All such forms are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a communicator, an electronic organizer, a smartphone, a notebook, a mobile gaming device, or a digital camera.

According to some embodiments of the invention, a computer program product comprises a computer readable medium such as, for example, a diskette or a CD-ROM. Figure 9 is a schematic drawing illustrating a computer readable medium in the form of a CD-ROM 900 according to some embodiments of the invention. The computer readable medium may have stored thereon a computer program comprising program instructions. The computer program may be loadable (as shown by arrow 910) into an electronic device 920 comprising a processing unit 940 and possibly a separate memory unit 930. The electronic device 920 may, for example, be a mobile terminal or a digital camera. When loaded into the electronic device 920, the computer program may be stored in the memory unit 930. According to some embodiments, the computer program may, when loaded into the electronic device 920 and run by the processing unit 940, cause the electronic device 920 to execute method steps according to, for example, any of the methods shown in any of the Figures 1 and 4B.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method of processing a stereo image for three-dimensional viewing, the stereo image comprising a first view captured by a first image acquiring arrangement and a second view captured by a second image acquiring arrangement, wherein the first view has a first information content and the second view has a second information content, the first information content comprising more information than the second information content, the method comprising:
stereo matching (140) of the first and second view;
transferring (150) information data from the first information content to the second view; and
producing (160) an updated second view having an updated information content, wherein the updated information content comprises more information than the second information content, by merging the transferred information data with information data of the second information content.

2. The method of claim 1, wherein
the step of stereo matching comprises creating (142a, 142b) a disparity map based on the first and second view;
the step of transferring information data comprises creating (151a, 151b) a synthesized second view based on the disparity map and the first view; and
the step of producing an updated second view comprises combining (161a, 161b) information of the synthesized second view and information of the second view to produce the updated information content.

3. The method of any of claims 1 through 2, wherein the first information content comprises coloring information and the second information content comprises no coloring information, and wherein the step of transferring information data from the first information content to the second view comprises transferring coloring information.

4. The method of claims 2 and 3, wherein the step of combining information of the synthesized second view and information of the second view to produce the updated information content comprises at least one of:
analyzing histograms of corresponding regions of the synthesized second view and the second view, and employing histogram equalization to produce color information for the second view; and
applying a color space representation with two or more channels to the synthesized second view and adding information of one or more of the two or more channels to the second view.

5. The method of any of claims 1 through 4, wherein the first view has a higher resolution of image elements than the second view, and wherein the step of transferring information data from the first information content to the second view comprises transferring information associated with image elements of the first view that are not present in the second view.

6. The method of claim 5 further comprising resizing (131b) the second view via interpolation of image elements of the second view.

7. The method of claims 2 and 5, wherein the step of combining information of the synthesized second view and information of the second view to produce the updated information content comprises:
inserting transferred image elements of the synthesized second view between image elements of the second view.

8. The method of claims 2 and 6, wherein the step of combining information of the synthesized second view and information of the second view to produce the updated information content comprises:
selecting (421) an image element of the updated second view as a corresponding image element of the synthesized second view if the absolute difference between a value of the corresponding image element of the synthesized second view and a value of a corresponding image element of the resized second view exceeds a threshold; and
selecting (422) the image element of the updated second view as the corresponding image element of the resized second view otherwise.

9. The method of claims 2 and 6, wherein the step of combining information of the synthesized second view and information of the second view to produce the updated information content comprises:
applying (460) a wavelet transform to the synthesized second view to produce a transformed second view;
substituting or combining (470) elements of the transformed second view with corresponding elements of the second view or of the resized second view to produce an altered transformed second view; and
applying (480) an inverse wavelet transform to the altered transformed second view.

10. The method of claims 2 and 6, wherein the step of combining information of the synthesized second view and information of the second view to produce the updated information content comprises:
producing (450) an intermediate updated second view by:
selecting (421) an image element of the updated second view as a corresponding image element of the synthesized second view if the absolute difference between a value of the corresponding image element of the synthesized second view and a value of a corresponding image element of the resized second view exceeds a threshold; and
selecting (422) the image element of the updated second view as the corresponding image element of the resized second view otherwise;
applying (460) a wavelet transform to the intermediate updated second view to produce a transformed second view;
substituting or combining (470) elements of the transformed second view with corresponding elements of the second view or of the resized second view to produce an altered transformed second view; and
applying (480) an inverse wavelet transform to the altered transformed second view.

11. A computer program product comprising a computer readable medium (900), having thereon a computer program comprising program instructions, the computer program being loadable into a data-processing unit (920) and adapted to cause the data-processing unit to execute the steps of any of claims 1 to 10 when the computer program is run by the data-processing unit.

12. An arrangement for processing a stereo image for three-dimensional viewing, the stereo image comprising a first view (310, 510, 610) captured by a first image acquiring arrangement (810) and a second view (320, 520, 620) captured by a second image acquiring arrangement (820), wherein the first view has a first information content and the second view has a second information content, the first information content comprising more information than the second information content, the arrangement comprising:
transferring (330, 350, 530, 550, 630, 650) circuitry adapted to transfer information data from the first information content to the second view; and
circuitry (370, 570, 670) adapted to produce an updated second view having an updated information content by merging the transferred information data with information data of the second information content.

13. The arrangement of claim 12, wherein
the transferring circuitry comprises:
a disparity estimator (330, 530, 630) adapted to create a disparity map based on the first and second view; and
a view synthesizer (350, 550, 650) adapted to create a synthesized second view based on the disparity map and the first view; and
the circuitry adapted to produce an updated second view comprises:
a combiner (370, 570, 670) adapted to combine information of the synthesized second view and information of the second view to produce the updated information content.

14. The arrangement of any of claims 12 through 13, wherein the first view has a higher resolution of image elements than the second view, further comprising:
an image resizer (521, 621) adapted to resize the second view via interpolation of image elements of the second view.

15. An electronic device comprising:
the arrangement according to any of claims 12 though 14; and
the first and second image acquiring arrangements (810, 820).
